# EUROPEAN PATENT SPECIFICATION

(11) **EP 0 553 696 B1**
(45) Date of publication and mention of the grant of the patent: **24.09.1997**
(21) Application number: 93100765.2
(22) Date of filing: 20.01.1993
(51) Int. Cl.: B60B 3/14

(54) **Motor-vehicle wheel**
Fahrzeugrad
Roue pour véhicule

(30) Priority: 31.01.1992 IT PN920008
(43) Date of publication of application: 04.08.1993
(73) Proprietor: KERSCHER Tuning GmbH, 84326 Rimbach-Dietring (DE)
(72) Inventor: Carmona, Federico, I-33080 Porcia (Pordenone) (IT)
(74) Representative: Gauger, Hans-Peter, Dipl.-Ing.

(56) References cited:
- FR-A- 2 172 018
- FR-A- 2 187 558
- GB-A- 2 060 518
- US-A- 3 759 576
- US-A- 3 759 576
- US-A- 3 869 174

## Description

The present invention relates to a motor vehicle wheel, and in particular a disc wheel adapted to be fitted to cars and being of the kind as referred to in the preamble of claim 1. Such wheel strutures are known from US-A-3 759 576.

Motorists frequently seek to use special body wheels of metallic alloys which are shaped in accordance with particular aesthetical preferences. In order to meet with the various dimensional and aesthetic demands in the motor vehicle market, the manufacturers of such special body wheels must design a considerable assortment of wheels and must therefore stock a corresponding number of expensive casting dies.

An even greater inconvenience in the market place occurs due to the fact that there are almost always differences in the wheel mounts among cars using wheels of identical sizes, i.e. wheels having the same diameter and the same rim width, either with respect to the number of holes by which the particular wheel is fixed to the hub-supporting drum or, in the case of the same number of fixing holes, in respect to the diameters of and the distances between such centering and/or fixing holes.

US-A-3 759 576 describes a wheel structure by which such demands and inconveniences are approached by providing the peripheral holes of the central hub of the wheel with dimensions large enough to receive the fixing bolts by which the wheel is secured to the hub-supporting drum of a car. The adapting flange which alternatively may also be arranged at an inner face of the wheel has its corresponding bolt holes which are alignable with respective ones of these peripheral holes of the wheel positioned on a single circle. The same corresponds to any particular circle of the fixing bolts for which there may exist with different car models different diameters. Such different diameter bolt circles are considered accordingly by the provision of a correspondingly different number of adapting flanges. Such flanges are each further provided with bushings in the bolt holes with the provision that the same may project into the peripheral holes of the central hub of the wheel. The peripheral holes of the wheel are having a transverse dimension which has to be large enough to receive such bushings for respective fixing purposes regardless of the actual bolt circle radii of the particular bolts on the hub-supporting drum which are received by these bushings. No particular consideration, however, is given with these known wheel structures to different numbers of fixing bolts of the hub-supporting drum as also arranged on different diameters so that the necessity still exists of having to stock a corresponding number of the rather expensive wheels in accordance with the different number of fixing bolts which will be considered for being served with such wheel structures.

US-A-3 869 174 describes a wheel structure which for the adaption to three different bolt circle diameters as most commonly existent with different car models uses no separate adapting flanges but instead provides radially alongated slots in the central hub of the wheel. These slots are made long enough to receive the fixing bolts in each of such different bolt circle diameters whereby with each fixing bolt an enternally threaded lug nut will be threadedly connected that includes a cylindrical portion dimensioned to closely fit within its companion alongate slot and bear against the opposite sides thereof for self-positioning of the wheel, regardles of which of the three diameters of bolt circles is involved. A close tolerance engagement between the lug nuts and the size of the alongate slots thereby ensures that the wheel cannot become misaligned or unbalanced.

The present invention seeks to provide improvements for a wheel structure of the kind illustrated in US-A-3 759 576 to provide a more universal adaption to various types of wheel mounts with varying numbers and positions of fixing points with respect to a common center of the wheel and the hub-supporting drum to which the same is to be secured by means of receiving bolts that are arranged on the drum.

The invention provides a wheel structure in accordance with claim 1. Further specific features are referred to in its dependent claims.

With a wheel structure according to the present invention provision is therefore been made of allowing a wheel structure to be used only with a single wheel for being secured to a hub-supporting drum of a car with either four points or five points fixings in combination with a corresponding number of adapting flanges by which the different number of such fixing points is considered as well as the different diameter circles thereof which otherwise are at the same time considered with the length of the alongate slots of the wheel. The wheel structure of the present invention is therefore designed for a more universal and accordingly less expensive use which is further contributed to by the provision of a spacer flange that will allow at the inner face of the wheel an adaption to any desired offset-value of the wheel.

Embodiments of the invention will now be described by way of a non-limitative example and with reference to the accompanying drawings of which:
- Fig. 1: is a side view of part of the wheel according to the invention;
- Fig. 2: is a sectional view of the central hub of the wheel as taken along line II-II of Fig. 1;
- Figs. 3 and 4: are, respectively a side view and a sectional view of an adapting flange for securing the wheel according to the invention to a hub-supporting drum of a car;
- Figs. 5 and 6: illustrate, similar to Figs. 3 and 4, a spacer flange for fitting up of the wheel according to the invention;
- Fig. 7: is an exploded and partially cutaway view of the structure including the wheel, the fitting up flanges and the end of the hub-supporting drum to which they are fitted; and
- Fig. 8: illustrates an alternative embodiment of the fitting up flanges.

### Detailed description of the preferred embodiments

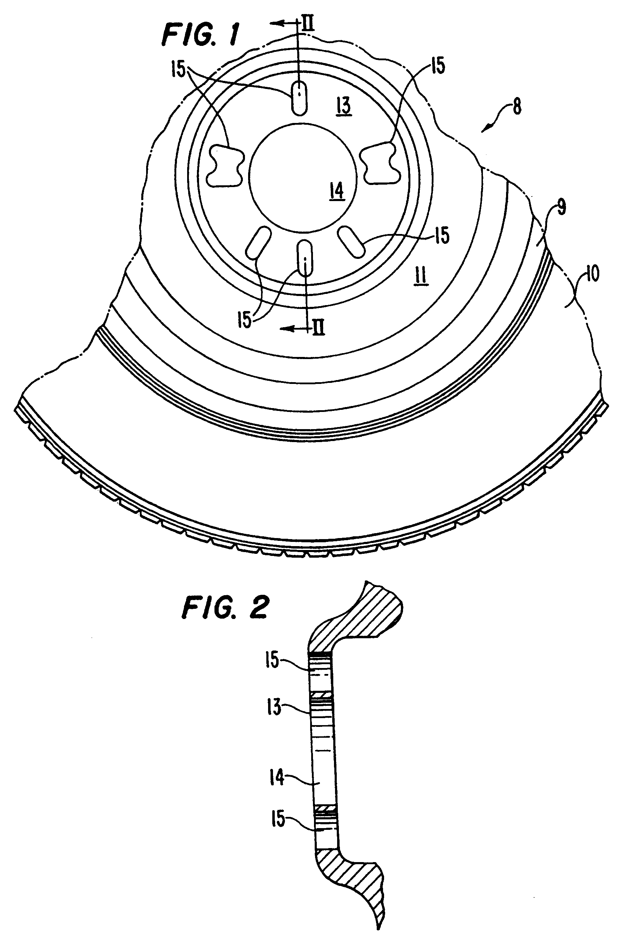

Figs. 1 and 2 show the central part of a car wheel of the present invention. The wheel 8 comprises a rim 9 supporting a tire 10 and a disc 11 which connects the rim 9 to a central hub.

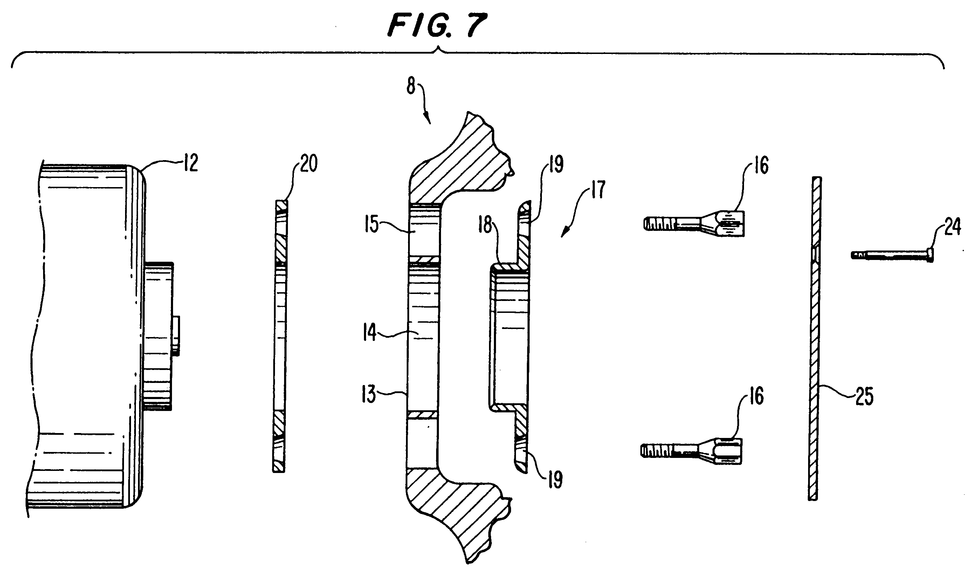

The central hub permits the wheel 8 to be coupled to the hub-supporting drum 12 (Fig. 7). The central hub has a flat surface 13 upon which the wheel 8 rests against the hub-supporting drum 12. In a known manner, a central hole 14 for centering the wheel 8 and peripheral holes 15 for receiving corresponding fixing bolts 16 (Fig. 7), by which the wheel 8 will be fixed to the drum 12, extend through the central hub.

According to the invention, the central hole 14 and the peripheral holes 15 are so dimensioned and shaped as to allow the wheel, having a given diameter and width of the rim 9, to be mounted to any of a variety of drums.

In particular, the central hole 14 has a diameter equal to the maximum size required by the cars which can use a wheel of such size. The number and distribution, i.e. the circumferential spacing of the peripheral holes 15 are such that the wheel can be fixed at both four and five points to a hub-supporting drum 12 of a car. Moreover, because each of the holes 15 comprises a radially extending slot, fixing bolts can be received therein at various positions from the centers of the holes 15, i.e. along various bolt circle diameters of those fixing bolts 16 which pass through the holes 15.

The wheel 8 defining the holes 14 and 15 can thusly be fitted to cars which use wheels of the same size but which have different fixing characteristics.

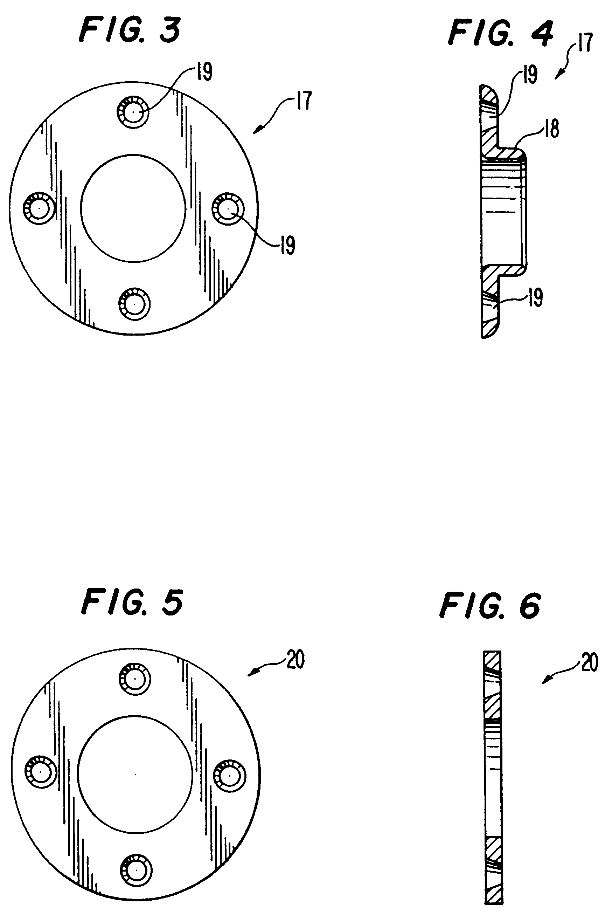

An adapting flange 17 provides a correct fit of the wheel 8 on the hub-supporting drum 12 of the car to which the wheel is to be fitted (Fig. 3 and 4). The adapting flange 17 is constituted by an annular metal plate (of steel, for instance), and a central bushing 18. Holes 19 extend through the periphery of the flange 17 and are positioned and sized according to the characteristics of the car to which the particular wheel 8 and the adapting flange 17 are to be mounted.

For instance, among the cars using 7 X 15" size wheels, there are cars having drums provided with four fixing holes spaced from one another by distances of 98 mm and a central hole having a diameter of 58 mm, and other cars having drums provided with five holes spaced from one another by distances of 114.3 mm and a central hole having a diameter of 67 mm. The adapting flange will therefore be provided in the first case with four holes 15 spaced from each other by distances of 98 mm and with a central bushing having a 58 mm inner diameter. In the second case an adapting flange will be provided with five holes spaced from each other by distances of 114.3 mm and with a central bushing having a 67 mm inner diameter.

It is to be noted further that other cars are provided with hub-supporting drums having the same fixing holes but with a different diameter or a different offset between the surface 13 of the wheel 8 and the center line of the groove of the rim 9. In the first embodiment, according to the invention, a first spacer flange 20, having a thickness adapted to achieve the desired offset value of the wheel 8, is interposed between the drum 12 and the wheel 8. The first spacer flange 20 is made of metal (for instance, aluminum) of annular shape and is provided with the holes 14, 15 permitting the correct fixing of the wheel 8.

When mounting the wheel 8 according to the first embodiment of the invention, the first spacer flange 20 is firstly laid onto the drum 12 (Fig. 7). The first spacer flange may also be provided with openings for receiving centering grub bolts provided on the drum 12 if so requested by any particular car model.

Thereafter, the supporitng surface 13 of the wheel 8 is laid on the spacer flange 20, and the adapting flange 17 will then be coupled to the drum 12 with the fixing bolts 16 to thereby fix the wheel 8 to the drum 12 as can be understood from Fig. 7.

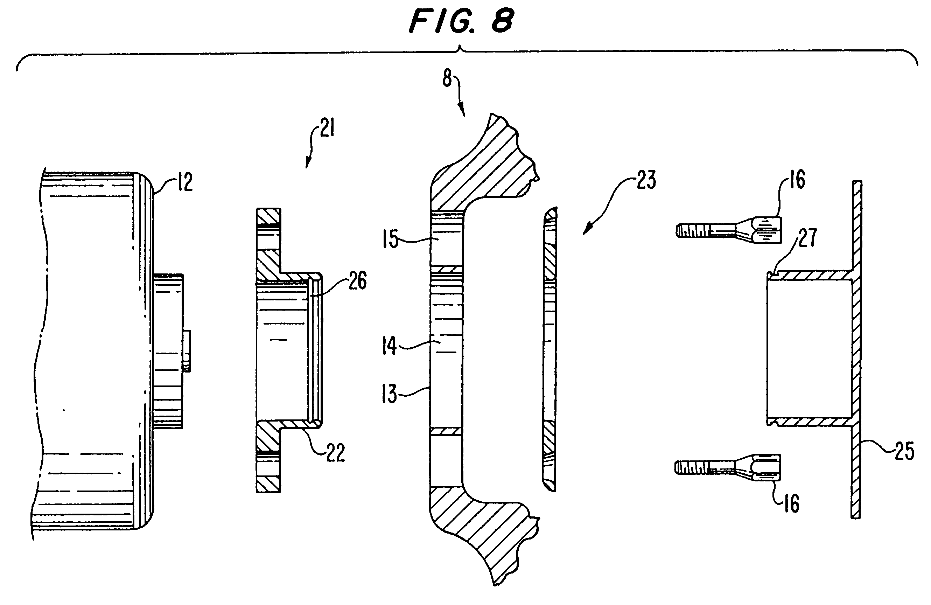

When a large offset of the wheel 8 from the drum 12 is required according to a second embodiment of the invention, the centering function may then be entrusted to a second spacer flange 21 provided with an appropriately dimensioned centering bushing 22 as shown in Fig. 8. In this case a clamping flange 23 being made in accordance with a simple annular shape unprovided with centering bushing (Fig. 8) will be used.

From what has been described, it is apparent that the wheel 8 according to the invention lends itself well to being produced, commercially distributed and used. In fact, for obtaining all the variants of wheel having a same size, one can advantageously start from a single "universal" type of wheel 8 which from time to time is adapted to the car referred to by means of a proper adapting flange 17. Likewise, wheels 8 with different offset values may be assembled between the supporting plane of the flat surface 13 of the wheel 8 and the center line of the groove of the rim 9, by avoiding to provide a corresponding number of wheels in one piece having different offset values.

A so conceived wheel 8 allows to rationalize the production and the storage of wheels of the same size, in that the fixing and offset variables are advantageously resolved by employing either an additional flange 17 together with one first spacer flange 20, or one second spacer flange 21 together with one clamping flange 23.

Such flanges contribute only a little to the industrial production costs of the wheel structure and to the overall size thereof. In addition, the wheel structure may be set up prior to delivery to the end user by simply assembling an adapting flange to the wheel. Also the raw materials used in manufacturing the wheel structure and economic capital spent in producing the wheel structure according to the invention are remarkably low because of the numerous variants of the wheel structure which can be realized by assembling the adapting flanges to only one type of wheel. Finally, the wheel according to the invention confers to the manufacturing, the commercial distributor and the end consumer a greater and more immediate flexibility in the use of the universal wheel simply by using the adapting flanges.

Obviously, many changes and variants will become apparant to those skilled in the art without departing from the scope of the present invention as defined in the appended claims.

For instance, both the wheel 8 and the flanges may comprise devices for a correct positioning thereof on a hub-supporting drum 12 of a car as well as devices adapted to facillitate their preassembly before their fixing to the car. Furthermore, as can be seen from Fig. 7, the adapting flange 17 may advantageously be provided with means, for instance screws 24, for fitting mouldings or a hub cover 25 over the hub of the wheel for aesthetic purposes.

In the wheel structure shown in Fig. 8, the means for applying a hub cover 25 may be in the form of an annular slot 26 provided on the inner side of the bushing 22 of the spacer flange 21. The shaped edge 27 of the hub cover 25 may be snap-fit to the annular slot 26.

## Claims

1. Wheel structure for mounting a tire (10) to a hub-supporting drum (12) of a motor vehicle, said wheel structure comprising:
- a wheel (8) including a rim (9) on which the tire (10) is to be supported, a central hub fixable to the hub-supporting drum (12), and a disc (11) connecting said rim to said central hub;
- said central hub of said wheel (8) having a central hole (14) extending centrally therethrough and being used to centre the wheel on a hub-supporting drum (12) and a plurality of peripheral holes (15) extending therethrough at locations spaced radially outwardly of said central hole and adapted for receiving fixing bolts (16) by means of which the wheel may be secured to said hub-supporting drum (12);
- an adapting flange (17) or a clamping flange (23) being arranged at an outer face of the central hub of the wheel (8) and having a central hole extending centrally therethrough and a plurality of bolt holes (19) extending therethrough at locations at which the bolt holes of the adapting flange are alignable with respective ones of the peripheral holes (15) of the hub of the wheel for its fixing to said hub supporting drum (12) by means of said fixing bolts (16);
characterized in that
- the central hole (14) of the wheel (8) has a diameter equal to the maximum size required by cars which can use a wheel of such size;
- the peripheral holes (15) of the wheel (8) are each provided with an elongate slot extending longitudinally in the radial direction of the central hub of the wheel, whereby the number and the circumferencial spacing of these elongate slots universally corresponds to the disposition of the fixing bolts (16) that are individually used for securing the wheel to said hub-supporting drum (12); and
- a first (20) or a second (21) spacer flange being arranged at an inner face of the wheel (8) and having a central hole and a plurality of peripheral holes at locations that are alignable with respective ones of the elongate slots of the wheel (8) and the bolt holes of the adapting flange (17) or the clamping flange (23) respectively.

2. Wheel structure according to claim 1, wherein said adapting flange (17) comprises the central bushing (18) defining it central hole, and an annular metallic plate extending around said central bushing, the bolt holes (19) of the adapting flange (17) extending through said metallic plate and having circumferential and radial dispositions and dimensions corresponding with the fixing characteristics of the car to the hub-supporting drum (12) of which a respective wheel (8) is to be secured.

3. Wheel structure according to claim 1 or claim 2, wherein said first spacer flange (20) comprises an annular metallic plate through which its bolt holes extend and the thickness of which is chosen such as to correspond with any desired offset-value of the wheel (8).

4. Wheel structure according to claim 1 or claim 2, wherein said second spacer flange (21) comprises a centering bushing (22) and an annular plate extending around said centering bushing, said centering bushing defining the central hole of the second spacer flange and chosen with its axial length such as to correspond with a relatively large offset-value of the wheel (8), the bolt holes of the second spacer flange extending through said annular plate.

5. Wheel structure according to any of the claims 1 to 4, wherein a hub cover (25) for fitting over said adapting flange (17; 23) is provided with means (27) for its fixing to the adapting flange.

## Patentansprüche

1. Radanordnung zur Montage eines Radreifens (10) an einer eine Nabe tragenden Trommel (12) eines Motorfahrzeuges, wobei die Radanordnung besteht aus:
- einem Rad (8), das eine Felge (9) aufweist, an welcher der Radreifen (10) zu tragen ist, eine mittige Nabe, die an der eine Nabe tragenden Trommel (12) zu befestigen ist, und eine Scheibe (11), welche die Felge mit der mittigen Nabe verbindet;
- wobei die mittige Nabe des Rades (8) ein mittiges Loch (14) aufweist, das durch sie mittig hindurchläuft und für eine Zentrierung des Rades an einer eine Nabe tragenden Trommel (12) verwendet wird, und eine Vielzahl von umfangsseitigen Löchern (15), die durch sie an Orten hindurchläuft, welche radial auswärts von dem mittigen Loch beabstandet und für die Aufnahme von Befestigungsbolzen (16) angepaßt sind, mittels welcher das Rad an der eine Nabe tragenden Trommel (12) befestigt werden kann;
- einem Anpassungsflansch (17) oder einem Klemmflansch (23), der an einer Außenseite der mittigen Nabe des Rades (8) angeordnet ist und ein mittiges Loch aufweist, das durch ihn mittig hindurchläuft, und eine Vielzahl von Bolzenlöchern (19), die durch ihn an Orten hindurch verlaufen, an welchen die Bolzenlöcher des Anpassungsflansches mit den einzelnen umfangsseitigen Löchern (15) der Nabe des Rades für seine Befestigung an der eine Nabe tragenden Trommel (12) mittels der Befestigungsbolzen (16) ausrichtbar sind;
dadurch gekennzeichnet, daß
- das mittige Loch (14) des Rades (8) einen Durchmesser gleich der maximalen Größe aufweist, welche für Fahrzeuge benötigt wird, die ein Rad einer solchen Größe verwenden können;
- die umfangsseitigen Löcher (15) des Rades (8) jeweils mit einem Längsschlitz versehen sind, der längs der radialen Richtung der mittigen Nabe des Rades verläuft, wodurch die Anzahl und der umfangsseitige Abstand dieser Längsschlitze der Anordnung der Befestigungsbolzen (16) universell entspricht, die für die Befestigung des Rades an der eine Nabe tragenden Trommel (12) einzeln verwendet werden; und
- ein erster (20) oder ein zweiter (21) Abstandsflansch an einer Innenseite des Rades (8) angeordnet ist und ein mittiges Loch und eine Vielzahl von umfangsseitigen Löchern an Orten aufweist, die mit den einzelnen Längsschlitzen des Rades (8) und den Bolzenlöchern des Anpassungsflansches (17) oder des Klemmflansches (23) ausrichtbar sind.

2. Radanordnung nach Anspruch 1, bei welcher der Anpassungsflansch (17) eine mittige Hülse (18) aufweist, die sein mittiges Loch definiert, und eine ringförmige Metallplatte, die um diese mittige Hülse herum verläuft, wobei die Bolzenlöcher (19) des Anpassungsflansches (17) durch die Metallplatte hindurch verlaufen und umfangsseitige und radiale Anordnungen und Abmessungen haben, die mit den Befestigungsmerkmalen des Fahrzeuges übereinstimmen, an dessen eine Nabe tragender Trommel (12) ein betreffendes Rad (8) zu befestigen ist.

3. Radanordnung nach Anspruch 1 oder Anspruch 2, bei welcher der erste Abstandsflansch (20) eine ringförmige Metallplatte aufweist, durch welche hindurch seine Bolzenlöcher verlaufen und dessen Dicke derart gewählt ist, daß sie mit jedem beliebigen Versatzwert des Rades (8) übereinstimmt.

4. Radanordnung nach Anspruch 1 oder Anspruch 2, bei welcher der zweite Abstandsflansch (21) eine Zentrierhülse (22) und eine Ringplatte aufweist, die um diese Zentrierhülse herum verläuft, wobei die Zentrierhülse das mittige Loch des zweiten Abstandsflansches definiert und mit ihrer axialen Länge derart gewählt ist, daß sie mit einem relativ großen Versatzwert des Rades (8) übereinstimmt, wobei die Bolzenlöcher des zweiten Abstandsflansches durch diese ringförmige Platte hindurch verlaufen.

5. Radanordnung nach einem der Ansprüche 1 bis 4, bei welcher eine Nabenkappe (25), die über den Anpassungsflansch (17; 23) paßt, mit Mitteln (27) für ihre Befestigung an dem Anpassungsflansch versehen ist.

## Revendications

1. Ensemble de roue à monter un pneu (10) à un tambour porte-moyeu (12) d'un véhicule automobile, qui comprend:
- une roue (8) comprenant une jante (9) à porter ledit pneu (10), un moyeu central approprié à être fixé audit tambour porte-moyeu (12), et une disque (11) qui relie ladite jante audit moyen central;
- ledit moyeu central de ladite roue (8) présentant un trou central (14), qui en passe au travers et qui sert à centrer la roue sur un tambour (12) porte-moyeu, ainsi qu'une pluralité de trous périphériques (15), qui en passent au travers aux endroits écartés en sens radial, à l'extérieur dudit trou central, et qui sont appropriés à recevoir des boulons de serrage (16) utilisés à monter la roue audit tambour porte-moyeu (12);
- une bride de raccord (17) ou une bride de serrage (23) étant disposée à une face extérieure dudit moyeu central de la roue (8) et présentant un trou central qui en passe centralement au travers, et une pluralité de trous de boulonnage (19) en passant aux endroits où on peut aligner les trous de boulonnage de ladite bride de raccord et des trous respectifs parmi lesdits trous périphériques (15) du moyeu de la roue l'un sur l'autre afin de les fixer audit tambour porte-moyeu (12) moyennant lesdits boulons de serrage (16);
**caractérisé en ce que**
- ledit trou central (14) de la roue (8) a un diamètre égal à la dimension maximale requise pour véhicules appropriés à l'utilisation d'une roue de telle dimension;
- chacun desdits trous périphériques (15) de ladite roue (8) est prévu d'une fente allongée qui s'étend en sens longitudinal radial dudit moyeu central de la roue, de façon que le nombre et l'écartement circonférentiel de ces fentes allongées correspondent généralement à l'arrangement desdits boulons de serrage (16) dont chacun est utilisé à monter la roue audit tambour porte-moyeu (12); et
- un premier collet écarteur (20) ou un deuxième collet écarteur (21) étant disposé à une surface intérieure de la roue (8) et présentant un trou central ainsi qu'une pluralité de trous périphériques aux endroits prévus à être alignés sur les fentes correspondantes parmi lesdites fentes allongées de la roue (8) et lesdits trous de boulonnage de ladite bridge de raccord (17) ou respectivement de ladite bride de serrage (23).

2. Ensemble de roue selon la revendication 1, dans lequel ladite bride de raccord (17) comprend une douille centrale (18) qui définit un trou central, et une plaque métallique annulaire, qui s'étend autour de ladite douille centrale, lesdits trous de boulonnage (19) de ladite bride de raccord (17) passant à travers ladite plaque métallique et présentant des arrangements et dimensions circonférentiels et radiaux en correspondance avec les caractéristiques de montage du véhicule auquel, sur le tambour porte-moyeu, une roue respective (8) est à monter.

3. Ensemble de roue selon la revendication 1 ou 2, dans lequel ledit premier collet écarteur (20) comprend une plaque annulaire en métal, à travers laquelle s'étendent ses trous de boulonnage et dont l'épaisseur est choisie de façon qu'elle corresponde à tout valeur de carrossage de la roue (8) souhaitée.

4. Ensemble de roue selon la revendication 1 ou 2, dans lequel ledit deuxième collet écarteur (21) comprend une douille de centrage (22) et une plaque annulaire, qui s'étend autour de ladite douille de centrage, cette douille de centrage définissant le trou central dudit deuxième collet écarteur et ayant une longueur axiale qui est choisie de façon qu'elle corresponde à une valeur de carrossage de la roue (8) relativement grande, lesdits trous de boulonnage dudit deuxième collet écarteur s'étendant à travers de ladite plaque annulaire.

5. Ensemble de roue selon une quelconque des revendications 1 à 4, dans lequel un couvre-moyeu (25), à monter sur ladite bride de raccord (17; 23) est prévu des moyens (27) pour son montage sur ladite bridge de raccord.
